# EUROPÄISCHE PATENTANMELDUNG

(11) **EP 1 916 755 A2**
(43) Veröffentlichungstag der Anmeldung: **30.04.2008**
(21) Anmeldenummer: 07020482.1
(22) Anmeldetag: 19.10.2007
(51) Int. Cl.: H02K 1/14

(54) **Transversalflussreluktanzmaschine un Verfahren zur Herstellung derselben**

(30) Priorität: 25.10.2006 DE 102006050201; 24.07.2007 EP 07014493
(71) Anmelder: ROBERT BOSCH GMBH, 70469 Stuttgart (DE)
(72) Erfinder: Kaehler, Christian, Dr., 52146 Würselen (DE); Gröning, Ingolf, Dr., 97816 Lohr (DE)
(74) Vertreter: Thürer, Andreas

(57) **Zusammenfassung**

Die Erfindung betrifft eine Transversalfluss- oder Transversalflussreluktanzmaschine mit einem eine Spulenanordnung mit wenigstens einem Phasenmodul (100; 600) umfassenden Primärteil und einem relativ zum Primärteil beweglichen Sekundärteil (300; 400; 410, 800), wobei ein Phasenmodul (100; 600) eine Phasenmodulwicklung (606), einen Phasenmodulrüeken (101; 601) und wenigstens ein ein Polelementpaar (105; 605) bildendes Paar von Polelementen (102; 602) aufweist, wobei jedes Polelement (102; 602) einen sich senkrecht vom Phasenmodulrücken (101; 601) erstreckenden Polelementrücken (103; 603) und einen sich parallel zum Phasenmodulrücken (101; 601) erstreckenden Polelementschenkel (104; 604) aufweist, wobei der Phasenmodulrücken (101; 601) zusammen mit jedem Polelement (102; 602) jeweils einen im wesentlichen C-förmigen Querschnitt bildet, wobei die Phasenmodulwicklung (606) zumindest teilweise innerhalb des im wesentlichen C-förmigen Querschnitts angeordnet ist, wobei die Polelemente (102; 602) des wenigstens einen Polelementpaares (105; 605) alternierend am Phasenmodulrücken (101; 601) angeordnet sind, wobei der Phasenmodulrücken (101; 601) zusammen mit beiden Polelementen (102; 602) des wenigstens einen Polelementpaares (105; 605) einen im wesentlichen rechteckigen Querschnitt bildet sowie ein Verfahren zur Herstellung derselben.

## Beschreibung

Die Erfindung betrifft eine Transversalflussreluktanzmaschine mit einem Primärteil und einem relativ zum Primärteil beweglichen Sekundärteil, sowie ein Verfahren zur Herstellung derselben.

Eine Transversalflussreluktanzmaschine (TFRM) besteht üblicherweise aus einem feststehendem Primärteil (Stator bzw. Ständer), das mit einer in Bewegungs- bzw. Drehrichtung verlaufenden Spulenwicklung versehen ist, und einem beweglichen bzw. rotierenden Sekundärteil (Läufer bzw. Rotor) aus.einem weichmagnetischen Material mit ausgebildeten Polen. Das Primärteil ist üblicherweise mit einer ein-, zwei-oder drei-phasigen, d.h. einer eine, zwei oder drei Phasenwicklungen aufweisenden Spulenanordnung ausgestattet, wobei die einzelnen Phasenwicklungen der Spulenanordnung üblicherweise magnetisch und elektrisch von den übrigen Phasenwicklungen isoliert sind.

Eine Rotations-Transversalflussreluktanzmaschine bekannter Bauart weist einen Stator mit drei elektrisch und magnetisch isolierten, in Umfangsrichtung verlaufenden Phasenwicklungen auf, die jeweils in Eisenjochen zur Magnetflussführung angeordnet sind. Die Joche sind üblicherweise'U-bzw. C-förmig ausgebildet und können aus massivem Material oder aus einzelnen, aneinandergefügten Blechen bestehen. Die Joche öffnen sich in radialer Richtung, d.h. senkrecht zur Rotationsachse der Maschine. Dabei zeigen die Schenkel der Joche in Richtung des mit ausgebildeten Polen versehenen, magnetischen Rotors, wobei die magnetisch aktive Fläche durch die Stirnseite der Jochschenkel bestimmt wird. Diese Stirnseiten sind aufgrund der beschriebenen Form der Joche relativ klein, was die Leistungsfähigkeit bzw. Kraftdichte der Maschinen beschränkt und eine hohe Drehmomentwelligkeit (Drehmomentrippel) verursacht.

Weiterhin erfordert das Einlegen der Phasenwicklungen in die Joche einen hohen Aufwand, da die Jochschenkel üblicherweise aus gestanzten Blechen bestehen und die Stirnseiten somit scharfkantig sind, was zu Beschädigungen der Wicklungen beim Einlegen führen kann. Eine Abschrägung der Stirnseiten ist nachteilig, da damit die magnetisch aktive Fläche weiter verkleinert wird.

Um Wicklungsbeschädigungen vorzubeugen, werden die Wicklungen der Einzelphasen in der Regel entweder im bereits gewickelten Zustand mit größerem bzw. kleinerem Durchmesser in die bereitgestellten Joche der Maschine eingelegt, was einen verminderten Kupferfüllfaktor zur Folge hat, oder in die bereitgestellten C-Joche der Transversalflussreluktanzmaschine eingewickelt, was einen hohen Fertigungsaufwand nach sich zieht.

Übliche Reluktanzmotoren sind aufgrund geringer Kraftdichten und geringer Wirkungsgrade für kleine Motoren und aufgrund geringer Energieeffizienz und zu hoher Blindleistung für große Motoren nicht optimal geeignet.

Bei einer linearen TFRM verlaufen die Wicklungen nicht kreisförmig, sondern oval auf dem Rücken oder in einer invertierten Phase zurück, so dass eine lineare TFRM einer "abgewickelten" rotativen TFRM entspricht und daher dieselben Nachteile aufweist.

Es stellt sich daher die Aufgabe, eine Transversalflussreluktanzmaschine anzugeben, bei der die genannten Nachteile vermindert sind und die eine höhere Kraftdichte bei verminderter Drehmomentwelligkeit und eine einfachere Montierbarkeit gewährleistet.

Diese Aufgabe wird gelöst durch eine Transversalflussreluktanzmaschine sowie ein Verfahren zu deren Herstellung mit den Merkmalen der unabhängigen Patentansprüche. Vorteilhafte Ausgestaltungen sind Gegenstand der Unteransprüche sowie der nachfolgenden Beschreibung.

Eine erfindungsgemäße Transversalflussreluktanzmaschine weist ein Primärteil mit einer Spulenanordnung mit wenigstens einem Phasenmodul und ein relativ zum Primärteil bewegliches Sekundärteil auf. Ein Phasenmodul weist eine Phasenmodulwicklung, einen Phasenmodulrücken und wenigstens ein ein Polelementpaar bildendes Paar von Polelementen auf. Jedes Polelement weist einen sich senkrecht vom Phasenmodulrücken erstreckenden Polelementrücken und einen sich parallel zum Phasenmödulrücken erstreckenden Polelementschenkel auf, wobei der Phasenmodulrücken zusammen mit jedem Polelement jeweils einen im wesentlichen C-förmigen.Querschnitt bildet. Die Phasenmodulwicklung ist zumindest teilweise innerhalb des im wesentlichen C-förmigen Querschnitts angeordnet und die Polelemente des wenigstens einen Polelementpaares sind alternierend am Phasenmodulrücken angeordnet, wobei der Phasenmodulrücken zusammen mit beiden Polelementen des wenigstens einen Polelementpaares einen im wesentlichen rechteckigen Querschnitt bildet. Die Phasenmodulwicklung verläuft somit im wesentlichen zwischen den Schenkeln des C-förmigen Querschnitts. Das Sekundärteil ist zweckmäßigerweise aus weichmagnetischem, d.h. ferromagnetisch mit einer geringen Koerzitivfeldstärke von bspw. <1000 A/m, Material gebildet.

Die Polelemente eines Polelementpaares erstrecken sich somit im wesentlichen L-förmig vom Phasenmodulrücken, so dass die Schenkel der L- bzw. C-Form alternierend entgegengesetzt ausgerichtet sind und die Polelemente zusammen mit dem Phasenmodulrücken im Querschnitt ein Rechteck bilden.

Bei den gezeigten und beanspruchten Ausgestaltungen ist der Stator mit der Spulenanordnung ausgestattet. Der Motor arbeitet nur aufgrund von Leitwertänderungen ohne den Einsatz von Permanentmagneten oder von Spulen im Rotor (Reluktanzprinzip). Bei einer weniger bevorzugten, aber dennoch äquivalenten Ausgestaltung ist der Stator aus weichmagnetischem Material gebildet und der Rotor mit einer Spulenanordnung versehen.

Im folgenden werden einige Bezeichnungen eingeführt, die zum besseren Verständnis dienen sollen. Im Sinne dieser Erfindung ist eine Phasenwicklung dadurch gekennzeichnet, dass sie zum Anschluss an eine elektrische Phase, z.B. bei Drehstrom U, V oder W, vorgesehen ist. Sie kann aus einer oder aus mehreren Phasenmodulwicklungen bestehen. In diesem Sinne bildet die Gesamtheit aller Phasenmodulwicklungen, die an dieselbe Phase anzuschließen sind, eine Phasenwicklung. Ebenso bilden alle Phasenmodule, deren Phasenmodulwicklungen eine Phasenwicklung bilden, eine Phasenmodulgruppe. Z.B. existieren bei einer dreiphasigen Maschine mit insgesamt neun Phasenmodulen drei Phasenmodulgruppen mit je drei Phasenmodulen : UUU, VVV und WWW. In diesem genannten Beispiel können die Phasenmodule innerhalb der Maschine beispielsweise gruppiert (UUUVVVWWW) oder alternierend (UVWUVWUVW) angeordnet werden. Eine Phasenmodulgruppe kann im Sinne dieser Erfindung ebenso aus einem einzigen Phasenmodul bestehen. Die Spulenanordnung weist der Anzahl der Stromversorgungsphasen entsprechend viele Phasenwicklungen auf, z.B. bei Drehstrom drei Phasenwicklungen.

Durch die erfindungsgemäße Ausgestaltung einer Transversalflussreluktanzmaschine wird die Herstellung bzw. der Zusammenbau einer derartigen Transversalflussreluktanzmaschine wesentlich vereinfacht und die Gefahr einer Fehlmontage minimiert. Der Kupferfüllfaktor wird wesentlich erhöht. Beides führt zu einer erhöhten Leistungsfähigkeit bei verminderten Herstellungskosten. Die Kraftdichte der Maschine wird verbessert und die Drehmomentwelligkeit wird vermindert.

Insbesondere ist es möglich, die einzelnen Phasenmodulwicklungen vor dem Zusammenbau der Maschine vorzuwickeln und zu isolieren und anschließend im gewickelten Zustand in die Phasenmodule einzuführen, wobei sowohl ein hoher Kupferfüllfaktor erreichbar ist als auch Beschädigungen der Wicklung vermindert bzw. vermieden werden können. Durch die Anordnung bzw. Ausrichtung die Öffnung des C-förmigen Querschnitts weg von der Magnetflussrichtung wird die magnetisch aktive Fläche durch eine Außenseite eines Polelementschenkels definiert und damit signifikant vergrößert. Ebenfalls wird damit eine Entkopplung von Eisenvolumen und Kupfervolumen erreicht, wodurch beide unabhängig voneinander dem gewünschten Einsatzgebiet der Maschine anpassbar sind. Insbesondere erreicht die Maschine aufgrund der größeren wirksamen Eisenfläche die Sättigung erst später, so dass sie sowohl für Dauer- als auch für Servo-Anwendungen (S1 bzw. S6) geeignet ist.

Die Polelemente sind alternierend um die Phasenmodulwicklung angeordnet, der C-förmige Querschnitt ist also abwechselnd in entgegengesetzte Richtungen geöffnet. Der Polelementrücken der einzelnen Polelemente passiert die Phasenmodulwicklung immer abwechselnd rechts und links. Es bietet , sich an, zuerst die in eine Richtung geöffneten bzw. gerichteten Polelemente vorzusehen bzw. am Phasenmodulrücken anzubringen, anschließend die Phasenmodulwicklung einzubringen und schließlich die in die andere Richtung geöffneten bzw. gerichteten Polelemente vorzusehen. Bei der erfindungsgemäßen Transversalflussreluktanzmaschine bzw. dem Verfahren zur Herstellung derselben können mehrere Phasenmodule unabhängig voneinander und nacheinander in einer Maschine angeordnet werden, was die eben genannten Vorteile weiter erhöht.

Die Einsatzgebiete einer erfindungsgemäßen Transversalflussreluktanzmaschine sind nicht beschränkt, sondern erstrecken sich auf alle Anwendungen, bei denen Elektromotoren eingesetzt werden können, einschließlich aller linearen, rotativen und solenoiden Bereiche. Ein bevorzugter, aber nicht ausschließlicher Einsatzbereich einer Ausgestaltung der erfindungsgemäßen Transversalflussreluktanzmaschine ist der Bereich der Industrieantriebe, insbesondere der Baugrößen 10 bis 380. Ein derartiges bevorzugtes Ausführungsbeispiel ist als dreiphasiger Antrieb mit ungefähr 3 x 380 Volt bis 3 x 480 Volt mit einem Drehzahlbereich von ungefähr 0 bis 30.000 min⁻¹ ausgebildet.

Gemäß einer bevorzugten Ausgestaltung ist die Phasenmodulwicklung des wenigstens einen Phasenmoduls mäanderförmig entlang der bzw. um die Polelemente angeordnet. Unter "mäanderförmig" wird im Sinne dieser Erfindung sowohl die klassische orthogonale Form eines Mäanders als auch eine gerundete bzw. geschlängelte Form, welche insbesondere als "laufender Hund" bezeichnet wird, verstanden. Durch die mäanderförmige Anordnung steht der Phasenmodulwicklung ein größerer Raum zur Verfügung, wodurch ein höherer Kupferfüllfaktor erreichbar wird, ohne auf magnetisch aktive Eisenfläche verzichten zu müssen. Auf diese Weise ist es sehr vorteilhaft möglich, die Kraftdichte der Maschine zu erhöhen.

Zweckmäßigerweise ist wenigstens ein Polelement am Phasenmodulrücken kraft-, form- oder stoffschlüssig, bevorzugt kraftschlüssig, befestigt. Es ist insbesondere vorteilhaft, den Phasenmodulrücken mit geeigneten Öffnungen zum Einstecken der Polelemente zu versehen, wobei die Polelemente L-förmig, vorteilhaft aber C-förmig ausgebildet sind. Ein C-förmiges Polelement weist dabei einen Polelementrücken und zwei sich davon im wesentlichen senkrecht erstreckende Polelementschenkel auf, wohingegen ein L-förmiges Polelement einen Polelementrücken und einen sich davon im wesentlichen senkrecht erstreckenden Polelementschenkel aufweist. Zum kraftschlüssigen Befestigen kann der mit Öffnungen versehene Phasenmodulrücken erhitzt werden, um die Öffnungen zu vergrößern, woraufhin ein Schenkel eines C-förmigen Polelements oder die Spitze des Polelementrückens eines L-förmigen Polelements in die entsprechende Öffnung eingeführt wird. Nach dem Abkühlen des Phasenmodulrückens ist eine kraftschlüssige Verbindung hergestellt, welche das aufwendige Befestigen beispielsweise durch Verschrauben, Schweißen usw. vermeidet. Damit kann das Gewicht der Transversalflussreluktanzmaschine reduziert werden.

Es ist vorteilhaft, wenn ein Polelementschenkel wenigstens eines Polelements an einer Innenkante abgefast bzw. abgekantet ist. Damit kann das Einführen der Phasenmodulwicklung weiter vereinfacht werden und mögliche Beschädigungen an der Phasenmodulwicklung können weiter reduziert werden. Die Abfasung kann ohne Verlust von magnetisch aktiver Fläche ausgestaltet werden, so dass ein sicheres und beschädigungsfreies Einführen einer Phasenmodulwicklung sichergestellt werden kann. Eine Abfasung ist vorteilhafterweise an allen Polelementinnenkanten vorhanden, die eine Beschädigung der Phasenmodulwicklung hervorrufen könnten. Es ist zusätzlich vorteilhaft, die Form der Polelemente derart auszubilden, dass die Kräftdichte weiter erhöht und die Drehmomentwelligkeit weiter vermindert wird. Beispielsweise kann der dem Rotor zugewandte Schenkel des Polelements kreissektorförmig oder dreieckig ausgestaltet werden, um die Drehmomentwelligkeit zu vermindern.

Es bietet sich an, den Rotor der Transversalflussreluktanzmaschine mit Zähnen aus weichmagnetischem Material auszubilden. Es ist zusätzlich vorteilhaft, die Form der Zähne derart auszubilden, dass die Kraftdichte weiter erhöht und die Drehmomentwelligkeit weiter vermindert wird. Beispielsweise kann die Stirnfläche eines Rotorzahns dreieckig, parallelogramm-, trapez-, rauten- oder kreissektorförmig ausgestaltet werden, um die Drehmomentwelligkeit zu vermindern. Alternativ oder zusätzlich können Kanten von Rotorzähnen abgefast sein. Zusätzlich oder alternativ kann die Breite der Rotorzähne so vorgegeben sein, dass der Motor eine hohe Kraft bei minimiertem Drehmomentrippel aufweist, wobei es vorteilhaft ist, die Breite auf ca. 20 bis 80 % der Polteilung des Stators, insbesondere vorteilhaft auf 40 bis 60 % der Polteilung des Stators auszuführen. Ebenso bietet es sich insbesondere bei Motoren, die für hohe Drehzahlen ausgelegt sind, an, den Rotor insgesamt bzw. die Rotorzähne geblecht auszuführen.

Der Motor kann mittels natürlicher Konvektion, mittels Belüftung oder mittels Flüssigkeitskühlung gekühlt werden, wobei es sich bei einem Betrieb mit Flüssigkeitskühlung anbietet, die Kühlrohre entweder in eine Nut einzubringen, um die Phasenmodulwicklungen direkt zu kühlen, oder in den Phasenmodulrücken. Bei Einbringung der Kühlrohre in den Phasenmodulrücken ist es vorteilhaft, links und rechts der Phasenmodulwichlungen zu kühlen, da diese Bereiche für die Leitung des magnetischen Flusses nicht benötigt werden. Damit kann der notwendige Bauraum minimiert und eine sehr hohe Kühlleistung erreicht werden, was einen Motor mit hoher Leistungsstärke bzw. -dichte bereitstellt.

Besonders vorteilhafterweise weist das wenigstens eine Phasenmodul wenigstens drei voneinander nicht gleich beabstandete Polelemewtpaare auf. Zusätzlich oder alternativ kann auch der Abstand der beiden Polelemente eines Polelementpaares für verschiedene Polelementpaare eines Phasenmoduls variiert werden. Durch diesen sogenannten Polelementpaarversatz bzw. Polelementversatz kann ebenfalls die Drehmomentwelligkeit reduziert werden. Der Versatz wird so ausgestaltet, dass Schwingungen bzw. Oberschwingungen in der resultierenden Kraftwirkung der Transversalflussreluktanzmaschine reduziert werden. Die vorteilhafte Wirkung des Polelementpaarversatzes und/oder des Polelementversatzes kann ebenso zweckmäßig durch einen Versatz der Magnete auf dem Rotor erzielt werden. Der Magnetversatz kann daher alternativ oder zusätzlich vorgesehen sein.

Zweckmäßigerweise weist eine erfindungsgemäße Transversalflussreluktanzmaschine eine Polbedeckung von ca. 30 % bis ca. 90 %, insbesondere ca. 55 % bis ca. 60 %, vorteilhafterweise ca. 58 % auf. Eine derartige Polbedeckung hat sich zum Erreichen einer hohen Kraftdichte bei minimierter Drehmomentwelligkeit als günstig erwiesen.

Es ist besonders vorteilhaft, wenn bei einer als Rotationsmaschine ausgebildeten Transversalflussreluktanzmaschine mit wenigstens einer Phasenmodulgruppe, die eine Anzahl n Phasenmodule aufweist, die Phasenmodule jeweils um einen vorgegebenen, auch variierenden Winkel βᵢ (i = 1 ,..., n-1) elektrisch zueinander verdreht angeordnet sind. Üblicherweise werden die Phasenmodule einer Phasenmodulgruppe unverdreht angeordnet. D.h., dass bspw. bei einer Phasenmodulgruppe UUU die Phasenmodule U elektrisch und mechanisch gleich ausgerichtet sind. Es ist nun besonders zur Verminderung einer Drehmomentwelligkeit günstig, vorgegebene Winkel βᵢ, die nicht alle notwendigerweise den gleichen Betrag aufweisen müssen, zwischen den Phasenmodulen einer Phasenmodulgruppe vorzusehen, demnach die Phasenmodule zueinander verdreht anzuordnen. Zwei Phasenmodule sind um einen Winkel βᵢ elektrisch verdreht, wenn ein Polelementpaar eines Phasenmoduls um βᵢ mechanisch gegen das entsprechende Polelementpaar des anderen Phasenmoduls verdreht ist. Die Summe der vorgesehenen Winkel sollte Null ergeben, wobei die einzelnen Winkel zweckmäßigerweise aus dem Bereich von -20° bis +20° gewählt sind. Beispielsweise könnte bei einer vier Phasenmodule aufweisenden Phasenmodulgruppe UUUU zwischen dem ersten und dem zweiten Phasenmodul ein Winkel β₁=4°, zwischen dem ersten und dem dritten Phasenmodul ein Winkel β₂=-3° und zwischen dem ersten und dem vierten Phasenmodul ein Winkel β₃=-1° vorgesehen sein, so dass die Summe der Winkel β₁+β₂+β₃=0° ergibt. Das Vorsehen dieser Winkel ist dabei von der tatsächlichen Reihenfolge der Phasenmodule unabhängig und kann auch bei einer, wie oben erläuterten, alternierenden Anordnung erfolgen.

Es ist ebenso vorteilhaft, wenn bei einer als Rotationsmaschine ausgebildeten Transversalflussreluktanzmaschine mit einer Anzahl m ≥ 3 Phasenmodulgruppen, die Phasenmodule unterschiedlicher Phasenmodulgruppen jeweils um einen vorgegebenen Winkel-(k-360°/m)+c<k; αₖ ∈ [-15°;15°]; k=1,...,m-1; zueinander elektrisch verdreht angeordnet sind. Üblicherweise werden die Phasenmodule von m unterschiedlichen Phasenmödulgruppen um den Winkel k-360°/m verdreht angeordnet. D.h., dass bspw. bei einer dreiphasigen Maschine zwischen dem Phasenmodul U und dem Phasenmodul V ein elektrischer Winkel von 120° und zwischen dem Phasenmodul U und dem Phasenmodul W ein elektrischer Winkel von 240° besteht. Es ist nun besonders zur Verminderung einer Drehmomentwelligkeit günstig, diesen Winkel k·360°/m um vorgegebene Winkel αₖ, die nicht alle notwendigerweise den gleichen Betrag aufweisen müssen, zu variieren. Die Summe der vorgesehenen Winkel αₖ sollte Null ergeben, wobei die einzelnen Winkel zweckmäßigerweise aus dem Bereich von -15° bis +15° gewählt sind. Beispielsweise könnten bei einer dreiphasigen Maschine zwischen dem ersten Phasenmodul U und dem ersten Phasenmodul V ein Winkel 125° (d.h. α₁=5°) und zwischen dem ersten Phasenmodul U und dem ersten Phasenmodul W ein Winkel 235° (d.h. α₂=-5°) vorgesehen sein, so dass die Summe der Winkel α₁+α₂=0° ergibt. Das Vorsehen dieser Winkel ist dabei von der tatsächlichen Reihenfolge der Phasenmodule unabhängig und kann auch bei einer, wie oben erläuterten, gruppierten Anordnung, z.B. UUUVVVWWW, erfolgen. Es sei weiterhin klargestellt, dass bei Phasenmodulgruppen mit je mehr als einem Phasenmodul die Winkel zwischen den jeweiligen ersten Phasenmodulen nicht identisch mit den Winkeln zwischen den jeweiligen zweiten Phasenmodulen usw. sein müssen. Es ist nur darauf zu achten, dass die Summe der Winkel αₖ einer Reihe, d.h. zwischen den jeweiligen n-ten Phasenmodulen, jeweils Null ergibt.

Es bietet sich an, die Winkel α und β zu kombinieren, wobei im Rahmen der oben genannten Randbedingung nicht mehr alle Winkel frei vorgebbar sind, sondern sich durch Abhängigkeit von anderen Winkeln ergeben, wie es einem Fachmann bei der Betrachtung klar ist.

Als Ausführungsbeispiele seien genannt:
1. Reihe [U₁V₁W₁] : [U₁(120°+α₁)V₁; U₁(240°+α₂)W₁]; α₁+α₂=0;
2. Reihe [U₂V₂W₂]: [U₂(120°+α₃)V₂; U₂(240°+α₄)W₂]; α₃+α₄=0;
3. Reihe [U₃V₃W₃]: [U₃(120°+α₅)V₃; U₃(240°+α₆)W₃]; α₅+α₆=0;

1. Gruppe [U₁U₂U₃] : [U₁(β₁)U₂; U₁(β₂)U₃]; β₁+β₂=0;
2. Gruppe [V₁V₂V₃] : [V₁(β₃)V₂; V₁(β₄)V₃]; β₃+β₄=0;
3. Gruppe [W₁W₂W₃] : [W₁(β₅)W₂; W₁(β₆)W₃], β₅+β₆=0;
   - alternierende Anordnung:
      [U₁V₁W₁] [U₂V₂W₂] [U₃V₃W₃]; wobei sich bei diesem Beispiel die Winkel β₃, β₄, β₅ und β₆ aus den übrigen Winkeln ergeben, beispielsweise ergibt sich β₃ aus α₁, β₁ und α₃.
   - gruppierte Anordnung:
      [U₁U₂U₃] [V₁V₂V₃] [W₁W₂W₃] ; wobei sich bei diesem Beispiel die Winkel α₃, α₄, α₅ und α₆ aus den übrigen Winkeln ergeben.

Bei einer gruppierten Anordnung sollte jedes zweite Phasenmodul elektrisch und mechanisch um 180° verdreht, d.h. insbesondere Polelementrücken an Polelementrücken, eingesetzt werden, um den Streufluss zwischen den Phasenmodulen zu minimieren.

Ein erfindungsgemäßes Verfahren zur Herstellung einer Transversalflussreluktanzmaschine mit einem Primärteil und einem Sekundärteil ergibt insbesondere eineerfindungsgemäße Transversalflussreluktanzmaschine. Ein erfindungsgemäßes Verfahren oder dessen bevorzugte Ausführungsform weist daher alle Schritte auf, die zum Herstellen einer erfindungsgemäßen oder bevorzugten Transversalflussreluktänzmaschine notweridig sind.

Es versteht sich, dass die vorstehend genannten und die nachstehend noch zu erläuternden Merkmale nicht nur in der jeweils angegeben Kombination, sondern auch in anderen Kombinationen oder in Alleinstellung werwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnungen ausführlich beschrieben.
- Figur 1: zeigt schematisch eine bevorzugte Ausgestaltung eines Phasenmodizls einer Transversalflussreluktanzmaschine;.
- Figur 2a: zeigt schematisch eine erste bevorzugte Ausgestaltung eines Polelements;
- Figur 2b: zeigt eine zweite bevorzugte Ausgestaltung eines, Polelements;
- Figuren 3a, 3b, 3c: zeigen schematisch eine erste bevorzugte Ausgestaltung eines Rotors;
- Figuren 4a, 4b, 4c: zeigen schematisch eine zweite bevorzugte Ausgestaltung eines Rotors;
- Figuren 5a, 5b, 5c: zeigen schematisch eine dritte bevorzugte Ausgestaltung eines Rotors;
- Figur 6a: zeigt schematisch den geblechten Aufbau eines Polelements ;
- Figur 6b: zeigt schematisch den geblechten Aufbau eines Phasenmodulrückens;
- Figur 7: zeigt schematisch einen mäanderförmigen Verlauf einer Phasenmodulwicklung eines Phasenmoduls;
- Figur 8: zeigt einen mit Permanentmagneten versehenen Rotor;
- Figur 9a: zeigt einen Innenläuferausschnitt; und
- Figur 9b: zeigt einen Außenläuferausschnitt.

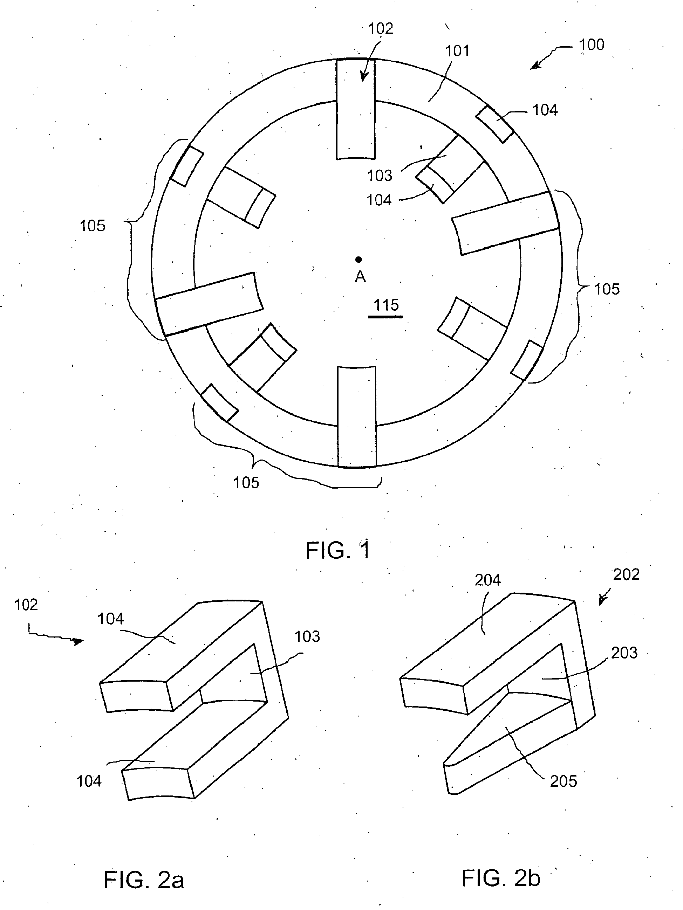

In Figur 1 ist schematisch ein Teil eines Phasenmoduls 100 eines Stators in Draufsicht gezeigt. Das Phasenmodul umfasst einen Phasenmodulrücken 101 und daran angebrachte Polelemente 102. Die Polelemente 102 sind C-förmig mit einem Polelementrücken 103 und zwei sich im wesentlichen senkrecht vom Polelementrücken erstreckenden Polelementschenkeln 104 ausgebildet und alternierend in Umfangsrichtung am Phasenmodulrücken 101 befestigt. In der gezeigten Draufsicht sind somit die Polelementrücken 103 der Polelemente 102 alternierend über und unter dem Phasenmodulrücken 101 angeordnet. Innerhalb der C-förmigen Öffnung zwischen den Polelementschenkeln 104 der Polelemente 102 verläuft mäanderförmig eine Phasenmodulwicklung (nicht gezeigt), die in Abhängigkeit von der Anzahl der Phasenmodule und der Phasenwicklungen Bestandteil einer Phasenwicklung oder eine Phasenwicklung selbst sein kann. Die Phasenmodulwicklung verläuft innerhalb des kreisringförmigen Phasenmodulrückens 101 in Umfangsrichtung und schlängelt sich dabei mäanderförmig um die Polelementrücken 103. Innerhalb des Phasenmoduls 100 ist ein Freiraüm 115 zur Aufnahme eines Rotors (nicht gezeigt) vorgesehen, der um eine Rotationsachse A drehbar angeordnet ist. Die Polelemente 102 sind paarweise zu Polelementpaaren 105 gruppiert. In der gezeigten Abbildung ist der Abstand der beiden Polelemente eines jeden Polelementpaares 105 gleich gewählt, wobei aber ebenso Polelementpaare mit unterschiedlichen Abständen der Polelemente vorsehbar sind. Das Phasenmodul 100 gemäß Figur 1 weist vier Polelementpaare 105 auf, die gemäß der gezeigten bevorzugten Ausführungsform nicht gleich beabstandet angeordnet sind. Diese Anordnung wird gewählt, um Drehmomentschwingungen zu minimieren.

In Figur 2a ist ein Polelement 102 gemäß Figur 1 detaillierter dargestellt. Das Polelement 102 ist im wesentlichen C-förmig ausgebildet und weist einen Polelementrücken 103 sowie zwei sich im wesentlichen davon senkrecht erstreckende Polelementschenkel 104 auf. Innerhalb der C-förmigen Öffnung wird die Phasenmodulwicklung geführt. In Figur 2a ist ein erstes Ausführungsbeispiel eines Polelements dargestellt, bei dem der dem Rotor (nicht gezeigt) zugewandte Polelementschenkel (in Figur 2a unten) im wesentlichen quaderförmig ausgebildet ist.

In Figur 2b ist ein zweites bevorzugtes Ausführungsbeispiel eines Polelements schematisch dargestellt und insgesamt mit 202 bezeichnet. Das Polelement 202 entspricht im wesentlichen dem Polelement 102 gemäß Figur 2a, wobei jedoch ein dem Rotor zugewandter Polelementschenkel 205 im wesentlichen sektorförmig ausgebildet ist. Ein anderer Schenkel 204 des im wesentlichen C-förmigen Polelements 202 ist weiterhin zur Befestigung in einem Phasenmodulrücken vorgesehen. Die sektorförmige Ausgestaltung des Polelementschenkels 205 trägt wiederum zu einer Minimierung der Drehmomentwelligkeit bei. Die Polelementschenkel 204, 205 sind über einen Polelementrücken 203 verbunden

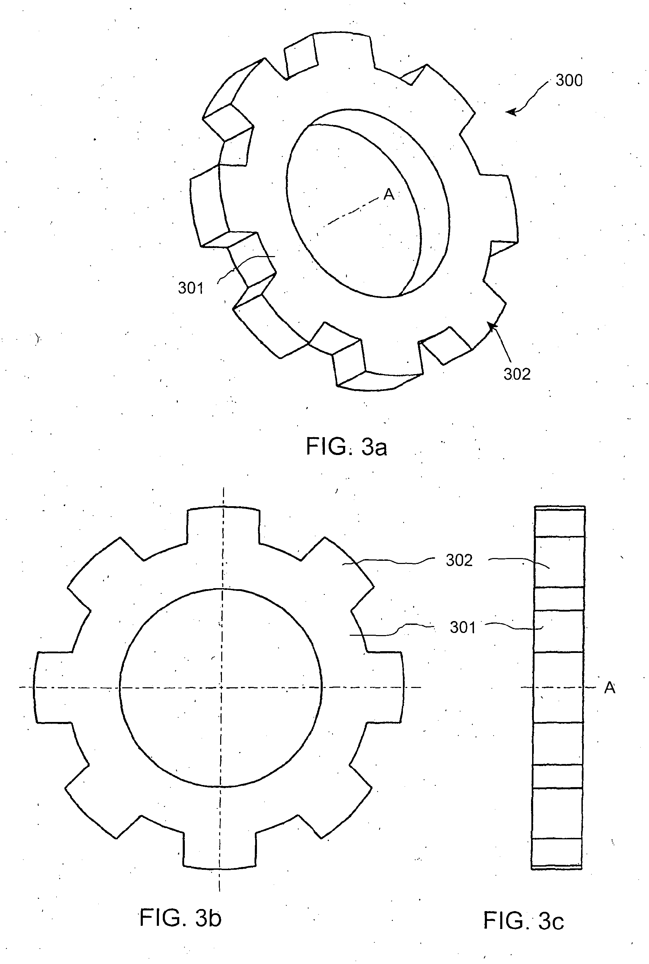

In den Figuren 3a, 3b, 3c ist eine erste bevorzugte Ausgestaltung eines aus weichmagnetischem Material ausgebildeten Rotors in verschiedenen Ansichten dargestellt und insgesamt mit 300 bezeichnet. In Figur 3a ist eine perspektivische Ansicht, in Figur 3b eine Ansicht von oben und in Figur 3c eine Ansicht von der Seite dargestellt. Der Rotor 300 ist für eine als Innenläufer ausgebildete erfindungsgemäße Transversalflussreluktanzmaschine geeignet und um eine Rotationsachse A drehbar ausgebildet. Der Rotor weist einen Rotorkörper 301 auf, an dessen Außenseite ausgebildete Zähne 302 vorgesehen sind. Bei der dargestellten ersten bevorzugten Ausführungsform des Rotors 300.sind die Zähne 302 gerade ausgeführt und weisen rechteckige Stirnflächen auf.

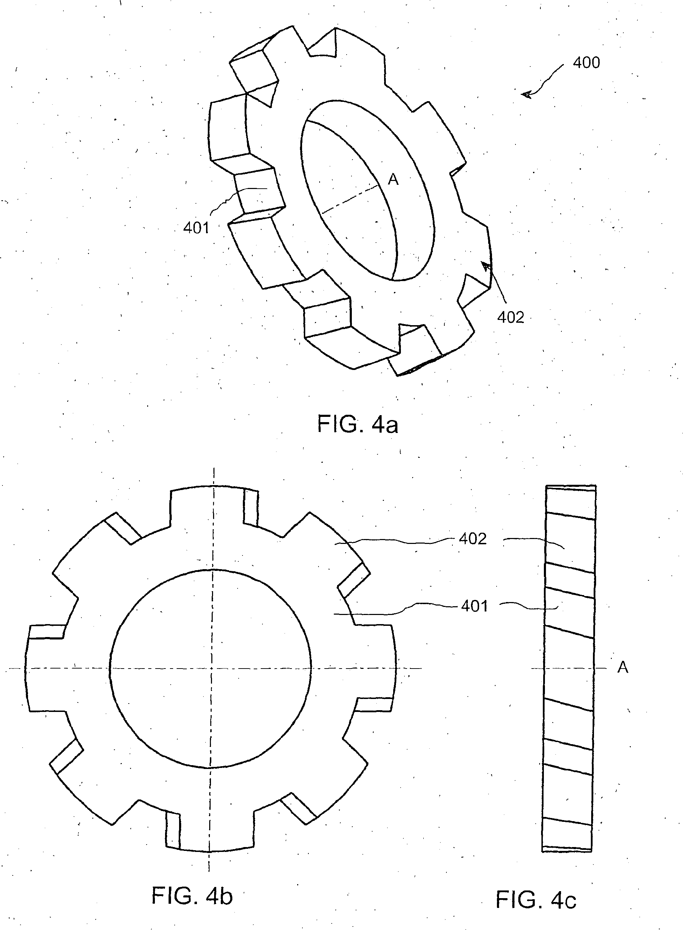

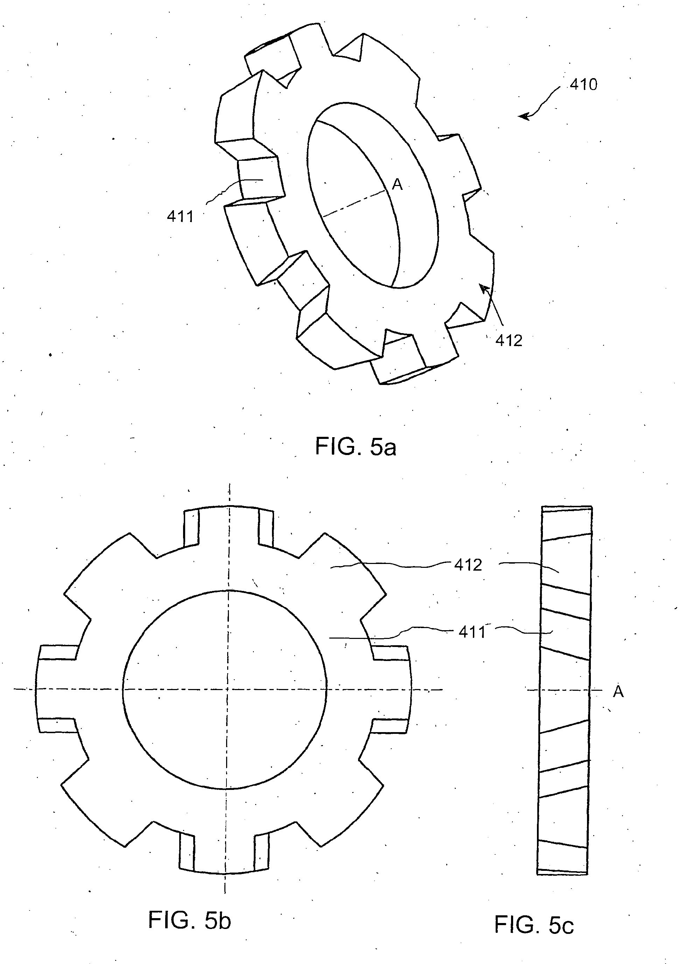

Die in den Figuren 4a, 4b, 4c und 5a, 5b, 5c dargestellten Rotoren 400 bzw. 410 unterscheiden sich von dem Rotor 300 durch die Ausgestaltung der jeweiligen Rotorzähne 402 bzw. 412. Die Stirnflächen der Rotorzähne 402 des Rotors 400 sind in Form eines Parallelogramms, die Stirnflächen der Rotorzähne 412 des Rotors 410 sind trapezförmig ausgebildet, was jeweils zu einer vorteilhaften Verminderung der Drehmomentwelligkeit beiträgt.

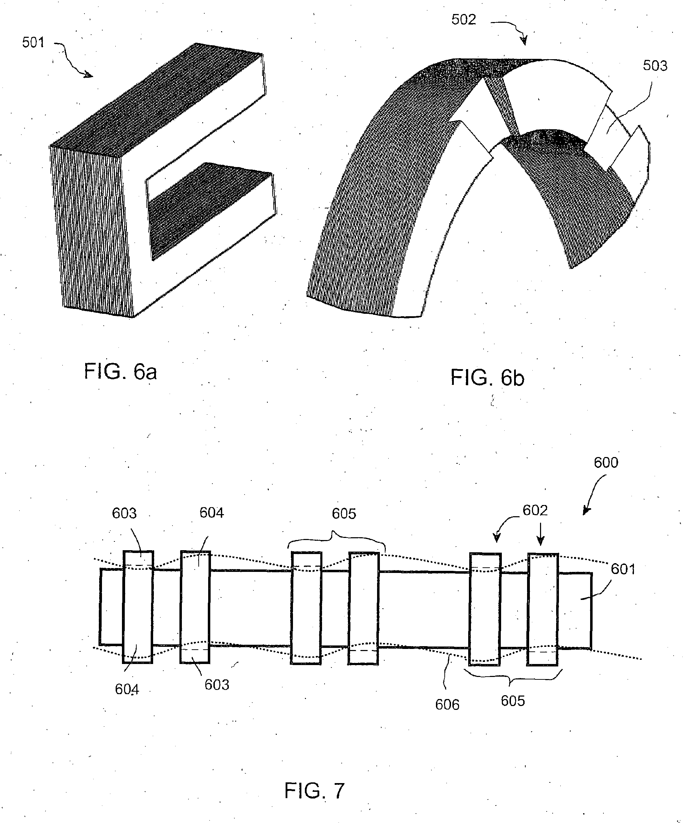

Bevorzugterweise sind sowohl die Rotorkörper 301, 401, 411 als auch die Rotorzähne 302, 402, 412 geblecht ausgeführt, wie es bspw. anhand eines Polelements in Figur 6a gezeigt ist.

In den Figuren 6a und 6b wird der bevorzugte Aufbau eines Polelements 501 sowie eines Phasenmodulrückens 502 näher erläutert, wobei aber rein schematische Darstellungen abgebildet sind. Das Polelement 501 kann zwar aus einem massiven Material wie z.B. Eisen bestehen, ist aber vorzugsweise geblecht, wie in Figur 6a gezeigt, ausgebildet. Um Wirbelströme zu vermindern wird das Polelement 501 aus einzelnen aneinandergefügten, elektrisch voneinander isolierten Blechen, insbesondere Eisenblechen, ausgebildet. Ebenso wird der Phasenmodulrücken 502 aus einzelnen aneinandergefügten, elektrisch voneinander isolierten Blechen, insbesondere Eisenblechen, ausgebildet. In dem Phasenmodulrücken 502 sind Aussparungen 503 zur Aufnahme der Polelemente vorhanden. Die Aussparungen 503 sind, ebenso wie in Figur 1, am oberen Rand des Phasenmodulrückens 502 angeordnet, können aber ebenso vollständig innerhalb des Phasenmodulrückens angeordnet sein.

In Figur 7 ist ein Ausschnitt eines Phasenmoäuls schematisch dargestellt und insgesamt mit 600 bezeichnet. Bei dem Phasenmodul 600 kann es sich sowohl um ein Phasenmodul einer linearen Transversalflussreluktanzmaschine als auch um ein Phasenmodul einer rotativen Transversalflussreluktanzmaschine, das "abgewickelt" dargestellt ist, handeln. Das Phasenmodul 600 weist einen Phasenmodulrücken 601 und daran angebrachte Polelemente 602 auf. Die Polelemente 602 sind zu Polelementpaaren 605 gruppiert.

Das Phasenmodul 600 ist in Draufsicht abgebildet,' so dass jeweils ein Polelementschenkel 604 oberhalb des Phasenmodulrückens 601 angeordnet ist. Die Polelementrücken 603 der Polelemente 602 sind alternierend rechts und links neben dem Phasenmodulrücken angeordnet.

Eine Phasenmodulwicklung 606 verläuft mäanderförmig um die Polelementrücken 603 entlang des Phäsenmodulrückens 601. Die Phasenmodulwicklung 606 wird in eine Richtung von den Polelementschenkeln 604 und in die entgegengesetzte Richtung von dem Phasenmodulrücken 601 begrenzt. Durch die mäanderförmige Anordnung steht der Phasenmodulwicklung 606 ein größerer Raum zur Verfügung, als er bei einer gerade verlaufenden Phasenmodulwicklung zur Verfügung stehen würde.

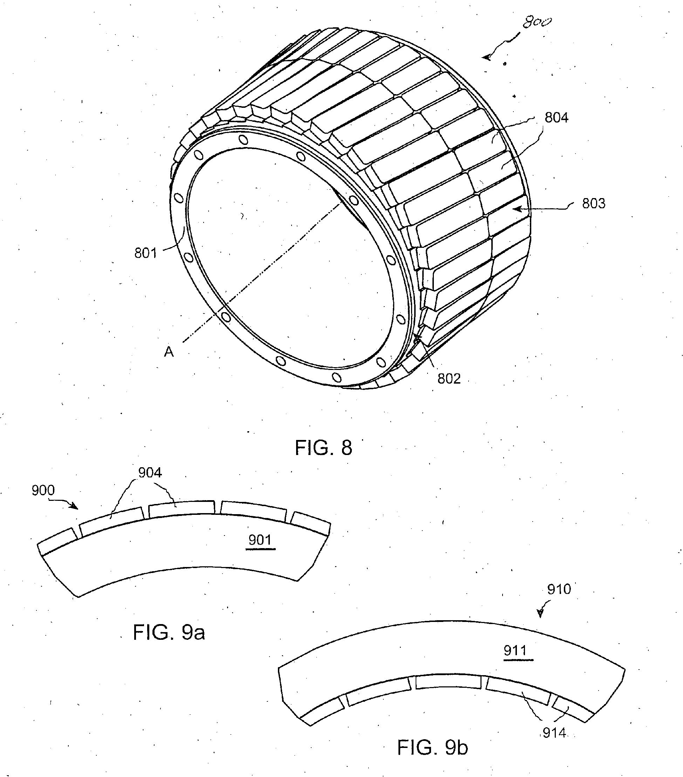

Dir Figuren 8, 9a und 9b werden später in Verbindung mit der Erläuterung des TFM-Prinzips näher erläutert.

Beim Zusammenbau einer erfindungsgemäßen Transversalflussreluktanzmaschine werden vorzugsweise zunächst die Phasenmodule maschinenaußenseitig mit dem Polelementen sowie der Phasenmodulwicklung versehen. Anschließend werden die fertigen Phasenmodule in der gewünschten Reihenfolge, d.h. gruppiert oder alternierend, und in der gewünschten Anordnung, d.h. beispielsweise winkelverschoben, in das Transversalflussreluktanzmaschinengehäuse eingebracht. Auf diese Weise wird eine Transversalflussreluktanzmaschine bereitgestellt, die leicht zu montieren ist und eine hohe Kraftdichte bei geringer Drehmomentwelligkeit bereitstellt.

Alle Phasenmodule bzw. Phasenmodulwicklungen, die zum Anschluss an dieselbe elektrische Phase vorgesehen sind, bilden die sogenannte Phasenwicklung. Ist die Transversalflussreluktanzmaschine zum Anschluss an einen dreiphasigen Drehstrom vorgesehen, weist sie drei Phasenwicklungen auf, die jeweils mehrere Phasenmodulwicklungen umfassen können. Die Phasenwicklungen bilden zusammen die Spulenanordnung der Transversalflussreluktanzmaschine.

Es versteht sich, dass in den dargestellten Figuren 1 bis 7 nur besonders bevorzugte Ausführungsformen der Erfindung dargestellt sind. Daneben ist jede andere Ausführungsform, insbesondere als Linearmaschine usw. denkbar, ohne den Rahmen dieser Erfindung zu verlassen.

Dasselbe erfindungsgemäße Konzept ist ebenfalls auf eine Transversalflussmaschine (TFM) anwendbar, welche beispielsweise mit einem von Permanentmagneten erregten Rotor arbeitet. Diesbezüglich wird hier auf die Beschreibung, die Zeichnungen und die Patentansprüche der europäischen Patentanmeldung mit der Anmeldenummer 07014493.6 verwiesen. Sowohl die TFRM-, als auch die TFM-Ausführung haben gemeinsam, dass ein Phasenmodulrücken vorgesehen ist, in den zumindest zwei Polelemente eines Polelementpaares einsteckbar sind. Die Polelemente ergänzen damit die zum Einstecken vorhandenen Aussparungen am Phasenmodulrücken wieder zu einem im wesentlichen rechteckigen Phasenmodulrückenquerschnitt.

Eine solche Transversalflussmaschine (TFM) besteht üblicherweise aus einem feststehendem Primärteil (Stator bzw. Ständer) und einem beweglichen bzw. rotierenden Sekundärteil (Rotor bzw. Läufer), von denen das eine Permanentmagnete aufweist, wohingegen das andere mit einer in Bewegungs- bzw. Drehrichtung verlaufenden Spulenwicklung versehen ist. Eine Transversalflussmaschine ist üblicherweise mit einer ein-, zwei- oder drei-phasigen, d.h. einer eine, zwei oder drei Phasenwicklungen aufweisenden Spulenanordnung ausgestattet, wobei die einzelnen Phasenwicklungen der Spulenanordnung üblicherweise magnetisch und elektrisch von den übrigen Phasenwicklungen isoliert sind.

Eine Rotations-Transversalflussmaschine bekannter Bauart weist einen Stator mit drei elektrisch und magnetisch isolierten, in Umfangsrichtung verlaufenden Phasenwicklungen auf, die jeweils in Eisenjochen zur Magnetflussführung angeordnet sind. Die Joche sind üblicherweise U- bzw. C-förmig ausgebildet und können aus massivem Material oder aus einzelnen, aneinandergefügten Blechen bestehen. Die Joche öffnen sich in radialer Richtung, d.h. senkrecht zur Rotationsachse der Maschine. Dabei zeigen die Schenkel der Joche in Richtung des mit Permanentmagneten versehenen Rotors, wobei die magnetisch aktive Fläche durch die Stirnseite der Jochschenkel bestimmt wird. Diese Stirnseiten sind aufgrund der beschriebenen Form der Joche relativ klein, was die Leistungsfähigkeit bzw. Kraftdichte der Maschinen beschränkt und eine hohe Drehmomentwelligkeit (Drehmomentripple) verursacht.

Weiterhin erfordert das Einlegen der Phasenwicklungen in die Joche einen hohen Aufwand, da die Jochschenkel üblicherweise aus gestanzten Blechen bestehen und die Stirnseiten somit scharfkantig sind, was zu Beschädigungen der Wicklungen beim Einlegen führen kann. Eine Abschrägung der Stirnseiten ist nachteilig, da damit die magnetisch aktive Fläche weiter verkleinert wird.

Um Wicklungsbeschädigungen vorzubeugen, werden die Wicklungen der Einzelphasen in der Regel entweder im bereits gewickelten Zustand mit größerem bzw. kleinerem Durchmesser in die bereitgestellten Joche der Maschine eingelegt, was einen verminderten Kupferfüllfaktor zur Folge hat, oder in die bereitgestellten C-Joche der Transversalflussmaschine eingewickelt, was einen hohen Fertigungsaufwand nach sich zieht.

Bei einer linearen TFM verlaufen die Wicklungen nicht kreisförmig, sondern oval auf dem Rücken oder in einer invertierten Phase zurück, so dass eine lineare TFM einer "abgewickelten" rotativen TFM entspricht und daher dieselben Nachteile aufweist.

Es stellt sich daher dieselbe Aufgabe, wie eine zuvor schon in Verbindung mit dem TFRM-Prinzip erwähnt.

Eine solche die Aufgabe lösende Transversalflussmaschine weist ein Primärteil und ein relativ zum Primärteil bewegliches Sekundärteil auf, wobei das Primärteil oder das Sekundärteil eine Spulenanordnung mit wenigstens einem Phasenmodul umfasst. Ein Phasenmodul weist eine Phasenmodulwicklung, einen Phasenmodulrücken und wenigstens ein ein Polelementpaar bildendes Paar von Polelementen auf. Jedes Polelement weist einen sich senkrecht vom Phasenmodulrücken erstreckenden Polelementrücken und einen sich parallel zum Phasenmodulrücken erstreckenden Polelementschenkel auf, wobei der Phasenmodulrücken zusammen mit jedem Polelement jeweils einen im wesentlichen C-förmigen Querschnitt bildet. Die Phasenmodulwicklung ist zumindest teilweise innerhalb des im wesentlichen C-förmigen Querschnitts angeordnet und die Polelemente des wenigstens einen Polelementpaares sind alternierend am Phasenmodulrücken angeordnet. Die Phasenmodulwicklung verläuft somit im wesentlichen, zwischen den Schenkeln des C-förmigen Querschnitts.

Die Polelemente eines Polelementpaares erstrecken sich somit im wesentlichen L-förmig vom Phasenmodulrücken, so dass die Schenkel der L- bzw. C-Form alternierend entgegengesetzt ausgerichtet sind und die Polelemente zusammen mit dem Phasenmodulrücken im Querschnitt ein Rechteck bilden.

Es gelten im Folgenden die identischen Bezeichnungen, welche bereits weiter oben für das TFRM-Prinzip eingeführt wurden. Es wird auf die entsprechenden Textabschnitte verweisen.

Der Rotor kann eine Spulenanordnung umfassen, weist aber vorzugsweise eine Permanentmagnetanordnung auf.

Durch die erfindungsgemäße Ausgestaltung einer Transversalflussmaschine wird die Herstellung bzw. der Zusammenbau einer derartigen Transversalflussmaschine wesentlich vereinfacht und die Gefahr einer Fehlmontage minimiert. Der Kupferfüllfaktor wird wesentlich erhöht. Beides führt zu einer erhöhten Leistungsfähigkeit bei verminderten Herstellungskosten. Die Kraftdichte der Maschine wird verbessert und die Drehmomentwelligkeit wird vermindert.

Insbesondere ist es möglich, die einzelnen Phasenmodulwicklüngen vor dem Zusammenbau der Maschine vorzuwickeln und zu isolieren und anschließend im gewickelten Zustand in die Phasenmodule einzuführen, wobei sowohl ein hoher Kupferfüllfaktor erreichbar ist als auch Beschädigungen der Wicklung vermindert bzw. vermieden werden können. Durch die Anordnung bzw. Ausrichtung die Öffnung des C-förmigen Querschnitts weg von der Magnetflussrichtung wird die magnetisch aktive Fläche durch eine Außenseite eines Polelementschenkels definiert und damit signifikant vergrößert. Ebenfalls wird damit eine Entkopplung von Eisenvolumen und Kupfervolumen erreicht, wodurch beide unabhängig voneinander dem gewünschten Einsatzgebiet der Maschine anpassbar sind. Insbesondere erreicht die Maschine aufgrund der größeren wirksamen Eisenfläche die Sättigung erst später, so dass sie sowohl für Dauer- als auch für Servo-Anwendungen (S1 bzw. S6) geeignet ist.

Die Polelemente sind alternierend um die Phasenmodulwicklung angeordnet, der C-förmige Querschnitt ist also abwechselnd in entgegengesetzte Richtungen geöffnet. Der Polelementrücken der einzelnen Polelemente passiert die Phasenmodulwicklung immer abwechselnd rechts und links. Es bietet sich an, zuerst die in eine Richtung geöffneten bzw. gerichteten Polelemente vorzusehen bzw. am Phasenmodulrücken anzubringen, anschließend die Phasenmodulwicklung einzubringen und schließlich die in die andere Richtung geöffneten bzw. gerichteten Polelemente vorzusehen. Bei,der erfindungsgemäßen Transversalflussmaschine bzw. dem Verfahren zur Herstellung derselben können mehrere Phasenmodule unabhängig voneinander und nacheinander in einer Maschine angeordnet werden, was die eben genannten Vorteile weiter erhöht.

Die Einsatzgebiete einer erfindungsgemäßen Transversalflussmaschine sind nicht beschränkt, sondern erstrecken sich auf alle Anwendungen, bei denen Elektromotoren eingesetzt werden können, einschließlich aller linearen, rotativen und solenoiden Bereiche. Ein bevorzugter, aber nicht ausschließlicher Einsatzbereich einer Ausgestaltung der erfindungsgeinäßen Transversalflussmaschine ist der Bereich der Industrieantriebe, insbesondere der Baugrößen 10 bis 380. Ein derartiges bevorzugtes Ausführungsbeispiel ist als dreiphasiger Antrieb mit ungefähr 3 x 380 Volt bis 3 x 480 Volt mit einem Drehzahlbereich von ungefähr 0 bis 30.000 min⁻¹ ausgebildet.

Der Phasenmodulrücken bildet zusammen mit beiden Polelementen des wenigstens einen Polelementpaares einen vorzugsweise rechteckigen Querschnitt. Dieser rechteckige Querschnitt hat den Vorteil, dass die Spulen einfach herstellbar sind und vorkonfektionierbar sind. Auch können die Spulen leicht in mehreren Arbeitsschritten derart montiert werden, dass zunächst alle ersten und gleichartig ausgerichteten Polelemente 102 am Rücken 101 aufgesetzt werden, wobei anschlie-ßend die vorkonfektionierte Wicklung eingebracht wird und anschließend alle zweiten und zum ersten Polelement entgegensetzten Polelemente 104 angeordnet werden.

Gemäß einer bevorzugten Ausgestaltung ist die Phasenmodulwicklung des wenigstens einen Phasenmoduls mäanderförmig entlang der bzw. um die Polelemente angeordnet. Unter "mäanderförmig" wird im Sinne dieser Erfindung sowohl die klassische orthogonale Form eines Mäanders als auch eine gerundete bzw. geschlängelte Form, welche insbesondere als "laufender Hund" bezeichnet wird, verstanden. Durch die mäanderförmige Anordnung steht der Phasenmodulwicklung ein größerer Raum zur Verfügung, wodurch ein höherer Kupferfüllfaktor erreichbar wird, ohne auf magnetisch aktive Eisenfläche verzichten zu müssen. Auf diese Weise ist es sehr vorteilhaft möglich, die Kraftdichte der Maschine zu erhöhen.

Zweckmäßigerweise ist wenigstens ein Polelement am Phasenmodulrücken kraft-, form- oder stoffschlüssig, bevorzugt kraftschlüssig, befestigt. Es ist insbesondere vorteilhaft, den Phasenmodulrücken mit geeigneten Öffnungen zum Einstecken der Polelemente zu versehen, wobei die Polelemente L-, förmig, vorteilhaft aber C-förmig ausgebildet sind. Ein C-förmiges Polelement weist dabei einen Polelementrücken und zwei sich davon im wesentlichen senkrecht erstreckende Polelementschenkel auf, wohingegen ein L-förmiges Polelement einen Polelementrücken und einen sich davon im wesentlichen senkrecht erstreckenden Polelementschenkel aufweist. Zum kraftschlüssigen Befestigen kann der mit Öffnungen versehene Phasenmodulrücken erhitzt werden, um die Öffnungen zu vergrößern, woraufhin ein Schenkel eines C-förmigen Polelements oder die Spitze des Polelementrückens eines L-förmigen Polelements in die entsprechende Öffnung eingeführt wird. Nach dem Abkühlen des Phasenmodulrückens ist eine kraftschlüssige Verbindung hergestellt, welche das aufwendige Befestigen beispielsweise durch Verschrauben, Schweißen usw. vermeidet. Damit kann das Gewicht der Transversalflussmaschine reduziert werden.

Es ist vorteilhaft, wenn ein Polelementschenkel wenigstens eines Polelements an einer Innenkante abgefast bzw. abgekantet ist. Damit kann das Einführen der Phasenmodulwicklung weiter vereinfacht werden und mögliche Beschädigungen an der Phasenmodulwicklung können weiter reduziert werden. Die Abfasung kann ohne Verlust von magnetisch aktiver Fläche ausgestaltet werden, so dass ein sicheres und beschädigungsfreies Einführen einer Phasenmodulwicklung sichergestellt werden kann. Eine Abfasung ist vorteilhafterweise an allen Polelementinnenkanten vorhanden, die eine Beschädigung der Phasenmodulwicklung hervorrufen könnten. Es ist zusätzlich vorteilhaft, die Form der Polelemente derart auszubilden, dass die Kraftdichte weiter erhöht und die Drehmomentwelligkeit weiter vermindert wird. Beispielsweise kann der dem Rotor zugewandte Schenkel'des Polelements kreissektorförmig oder dreieckig ausgestaltet werden, um die Drehmomentwelligkeit zu vermindern.

Bei einem mit einer Permanentmagnetanordnung versehenen Rotor bietet es sich an, die Form und Ausgestaltung der Permanentmagnete so zu wählen, dass die Kraftdichte weiter erhöht und die Drehmomentwelligkeit weiter vermindert wird. Zu diesem Zweck hat sich der Einsatz von Schalenmagneten mit und ohne Abfasungen in einer schrägen Anordnung oder einer Schmetterlingsanordnung als günstig erwiesen.

Besonders vorteilhafterweise weist das wenigstens eine Phasenmodul wenigstens drei voneinander nicht gleich beabstandete Polelementpaare auf. Zusätzlich oder alternativ kann auch der Abstand der beiden Polelemente eines Polelementpaares für verschiedene Polelementpaare eines Phasenmoduls variiert werden. Durch diesen sogenannten Polelementpaarversatz bzw. Polelementversatz kann ebenfalls die Drehmomentwelligkeit reduziert werden. Der Versatz wird so ausgestaltet, dass Schwingungen bzw. Oberschwingungen in der resultierenden Kraftwirkung der Transversalflussmaschine reduziert werden. Die vorteilhafte Wirkung des Polelementpaarversatzes und/oder des Polelementversatzes kann ebenso zweckmäßig durch einen versatz der Magnete auf dem Rotor erzielt werden. Der Magnetversatz kann daher alternativ oder zusätzlich vorgesehen sein.

Zweckmäßigerweise weist eine erfindungsgemäße Transversalflussmaschine eine Polbedeckung von ca. 30 % bis ca. 90 %, insbesondere ca. 55 % bis ca. 60 %, vorteilhafterweise ca. 58 % auf. Eine derartige Polbedeckung hat sich zum Erreichen einer hohen Kraftdichte bei minimierter Drehmomentwelligkeit als günstig erwiesen.

Es ist besonders vorteilhaft, wenn bei einer als Rotationsmaschine ausgebildeten Transversalflussmaschine mit wenigstens einer Phasenmodulgruppe, die eine Anzahl n Phasenmodule aufweist, die Phasenmodule jeweils um einen vorgegebenen, auch variierenden Winkel βᵢ (i = 1, ..., n-1) elektrisch zueinander verdreht angeordnet sind. Üblicherweise werden die Phasenmodule einer Phasenmodulgruppe unverdreht angeordnet. D.h., dass bspw. bei einer Phasenmodulgruppe UUU die Phasenmodule U elektrisch und mechanisch gleich ausgerichtet sind. Es ist nun besonders zur Verminderung einer Drehmomentwelligkeit günstig, vorgegebene Winkel βᵢ, die nicht alle notwendigerweise den gleichen Betrag aufweisen müssen, zwischen den Phasenmodulen einer Phasenmodulgruppe vorzusehen, demnach die Phasenmodule zueinander verdreht anzuordnen. Zwei Phasenmodule sind um einen Winkel βᵢ elektrisch verdreht, wenn ein Polelementpaar eines Phasenmoduls um βᵢ mechanisch gegen das entsprechende Polelementpaar des anderen Phasenmoduls verdreht ist. Auch wäre es möglich, die elektrische Verdrehung über eine Verdrehung im' Rotor zu realisieren, insbesondere die entsprechenden Magnete um den Winkel βᵢ zu versetzen. Der Magnetversatz kann alternativ oder zusätzlich vorgesehen sein. Die Summe der vorgesehenen Winkel sollte Null ergeben, wobei die einzelnen Winkel zweckmäßigerweise aus dem Bereich von -20° bis +20° gewählt sind. Beispielsweise könnte bei einer vier Phasenmodule aufweisenden Phasenmodulgruppe UUUU zwischen dem ersten und dem zweiten Phasenmodul ein Winkel β₁=4°, zwischen dem ersten und dem dritten Phasenmodul ein Winkel β₂=-3° und zwischen dem ersten und dem vierten Phasenmodul ein Winkel β₃=-1° vorgesehen sein, so dass die Summe der Winkel β₁+β₂+β₃=0° ergibt. Das Vorsehen dieser Winkel ist dabei von der tatsächlichen Reihenfolge der Phasenmodule unabhängig und kann auch bei einer, wie oben erläuterten, alternierenden Anordnung erfolgen.

Es ist ebenso vorteilhaft, wenn bei einer als Rotationsmaschine ausgebildeten Transversalflussmaschine mit einer Anzahl m ≥ 3 Phasenmodulgruppen, die Phasenmodule unterschiedlicher Phasenmodulgruppen jeweils um einen vorgegebenen Winkel (k·360°/m)+αₖ; αₖ ∈ [-15°;15°]; k=1,...,m-1; zueinander elektrisch verdreht angeordnet sind. Üblicherweise werden die Phasenmodule von m unterschiedlichen Phasenmodulgruppen um den Winkel k·360°/m verdreht angeordnet. D.h., dass bspw. bei einer dreiphasigen Maschine zwischen dem Phasenmodul U und dem Phasenmodul V ein elektrischer Winkel von 120° und zwischen dem Phasenmodul U und dem Phasenmodul W ein elektrischer Winkel von 240° besteht. Es ist nun besonders zur Verminderung einer Drehmomentwelligkeit günstig, diesen Winkel k·360°/m um vorgegebene Winkel αₖ, die nicht alle notwendigerweise den gleichen Betrag aufweisen müssen, zu variieren. Die Summe der vorgesehenen Winkel αₖ sollte Null ergeben, wobei die einzelnen Winkel zweckmä-ßigerweise aus dem Bereich von -15° bis +15° gewählt sind. Beispielsweise könnten bei einer dreiphasigen Maschine zwischen dem ersten Phasenmodul U und dem ersten Phasenmodul V ein Winkel 125° (d.h. α₁=5°) und zwischen dem ersten Phasenmodul U und dem ersten Phasenmodul W ein Winkel 235° (d.h. α₂=-5°) vorgesehen sein, so dass die Summe der Winkel α₁+α₂=0° ergibt. Das Vorsehen dieser Winkel ist dabei von der tatsächlichen Reihenfolge der Phasenmodule unabhängig und kann auch bei einer, wie oben erläuterten, gruppierten Anordnung, z.B. UUUVVVWWW, erfolgen. Es sei weiterhin klargestellt, dass bei Phasenmodulgruppen mit je mehr als einem Phasenmodul die Winkel zwischen den jeweiligen ersten Phasenmodulen nicht identisch mit den Winkeln zwischen den jeweiligen zweiten Phasenmodulen usw. sein müssen. Es ist nur darauf zu achten, dass die Summe der Winkel αₖ einer Reihe, d.h. zwischen den jeweiligen n-ten Phasenmodulen, jeweils Null ergibt.

Es bietet sich an, die Winkel α und β zu kombinieren, wobei im Rahmen der oben genannten Randbedingung nicht mehr alle Winkel frei vorgebbar sind, sondern sich durch Abhängigkeit von anderen Winkeln ergeben, wie es einem Fachmann bei der Betrachtung klar ist.

Als Ausführungsbeispiele seien genannt:
1. Reihe [U₁V₁W₁]: [U₁(120°+α₁)V₁; U₁(240°+α₂)W₁]; α₁+α₂=0;
2. Reihe [U₂V₂W₂]: [U₂(120°+α₃)V₂; U₂(240°+α₄)W₂]; α₃+α₄=0;
3. Reihe [U₃V₃W₃]: [U₃(120°+α₅)V₃; U₃(240°+α₆)W₃]; α₅+α₆=0;

1. Gruppe [U₁U₂U₃]: [U₁(β₁)U₂; U₁(β₂)U₃]; β₁+β₂=0;
2. Gruppe [V₁V₂V₃]: [V₁(β₃)V₂; V₁(β₄)V₃]; β₃+β₄=0;
3. Gruppe [W₁W₂W₃]: [W₁(β₅)W₂; W₁(β₆)W₃], β₅+β₆=0;
   - alternierende Anordnung:
      [U₁V₁W₁] [U₂V₂W₂] [U₃V₃W₃] ; wobei sich bei diesem Beispiel' die Winkel β₃, β₄, β₅ und β₆ aus den übrigen Winkeln ergeben, beispielsweise ergibt sich β₃ aus α₁, β₁ und α₃.
   - gruppierte Anordnung:
      [U₁U₂U₃] [V₁V₂V₃] [W₁W₂W₃]; wobei sich bei diesem Beispiel die Winkel α₃, α₄, α₅ und α₆ aus den übrigen Winkeln ergeben.

Bei einer gruppierten Anordnung sollte jedes zweite Phasenmodul elektrisch und mechanisch um 180° verdreht, d.h. insbesondere Polelementrücken an Polelementrücken, eingesetzt werden, um den Streufluss zwischen den Phasenmodulen zu minimieren.

Ein erfindungsgemäßes Verfahren zur Herstellung einer Transversalflussmaschine mit einem Primärteil und einem Sekundärteil ergibt insbesondere eine erfindungsgemäße Transversalflussmaschine. Ein erfindungsgemäßes Verfahren oder dessen Bevorzugte Ausführungsform weist daher alle Schritte auf, die zum Herstellen einer erfindungsgemäßen oder bevorzugten Transversalflussmaschine notwendig sind.

Bezüglich der TFM-Ausführungsformen wird auf die bereits in Verbindung mit der TFRM-Ausführung beschriebenen Figuren 1 bis 7 zusammen mit deren Beschreibung verwiesen. Die TFRM-Prinzipien sind analog auch auf das TFM-Prinzip anwendbar. Ausgenommen hiervon ist die Ausführung des Rotors. Das TFM-Prinzip unterscheidet sich vom TFRM-Prinzip in der Ausführung des Rotors..Dieser Unterschied wird anhand der folgenden Figurenbeschreibungen deutlich.

In Figur 8 ist eine bevorzugte Ausgestaltung eines mit Permanentmagneten versehenen Rotors dargestellt und insgesamt mit 800 bezeichnet. Der Rotor 800 ist für eine als Innenläufer ausgebildete erfindungsgemäße Transversalflussmaschine geeignet. Der Rotor weist einen Rotorkörper 801 auf, an dessen Außenseite 802 eine Permanentmagnetanordnung 803 vorgesehen ist. Die Permanentmagnetanordnung 803 besteht aus einer zweireihigen umlaufenden Anordnung aus einzelnen Permanentmagneten 804. Um die Drehmomentwelligkeit der Transversalflussmaschine weiter zu vermindern, ist die Permanentmagnetanordnung 803 geschrägt ausgebildet, d.h. die einzelnen Permanentmagnete 804 sind schräg zur Rotationsachse A des Rotors 800 angeordnet.

In Figur 9a ist ein Ausführungsbeispiel eines Rotors 900 für eine Innenläufermaschine ausschnittsweise im Querschnitt dargestellt. Der Rotor 900 weist wiederum einen Rotorkörper 901 sowie darauf angebrachte Permanentmagnete 904 auf. Die Permanentmagnete 904 sind als Schalenmagnete mit abgeschrägten Kanten ausgebildet, um die Kraftdichte der Transversalflussmaschine zu erhöhen und die Drehmomentwelligkeit zu vermindern. In Figur 9b ist ein Ausführungsbeispiel eines Rotors 910 einer als Außenläufermaschine ausgebildeten Transversalflussmaschine abgebildet. Der Rotor 910 weist einen Rotorkörper 911 mit daran angebrachten Permanentmagneten 914 auf. Die Permanentmagnete 914 sind wiederum als Schalenmagnete mit abgeschrägten bzw. abgefasten Kanten ausgebildet, um die die Kraftdichte der Transversalflussmaschine zu erhöhen und die Drehmomentwelligkeit zu vermindern. Es sei darauf hingewiesen, dass die Abfasung bei beiden gezeigten Permanentmagnetarten 904 und 914 so ausgebildet ist, dass sich die Magnetfläche zum konkaven Ende hin vergrößert.'

Beim Zusammenbau einer erfindungsgemäßen Transversalflussmaschine werden vorzugsweise zunächst die Phasenmodule maschinenaußenseitig mit dem Polelementen sowie der Phasenmodulwicklung versehen. Anschließend werden die fertigen Phasenmodule in der gewünschten Reihenfolge, d.h. gruppiert oder alternierend, und in der gewünschten Anordnung, d.h. beispielsweise winkelverschoben, in das Transversalflussmaschinengehäuse eingebracht. Auf diese Weise wird eine Transversalflussmaschine bereitgestellt, die leicht zu montieren ist und eine hohe Kraftdichte bei geringer Drehmomentwelligkeit bereitstellt.

Alle Phasenmodule bzw. Phasenmodulwicklungen, die zum Anschluss an dieselbe elektrische Phase vorgesehen sind, bilden die sogenannte Phasenwicklung. Ist die Transversalflussmaschine zum Anschluss an einen dreiphasigen Drehstrom vorgesehen, weist sie drei Phasenwicklungen auf, die jeweils mehrere Phasenmodulwicklungen umfassen können. Die Phasenwicklungen bilden zusammen die Spulenanordnung der Transversalflussmaschine.

Es versteht sich, dass in den dargestellten Figuren 8 bis 9 nur besonders bevorzugte Ausführungsformen der Erfindung dargestellt sind. Daneben ist jede andere Ausführungsform, insbesondere als Linearmaschine usw. denkbar, ohne den Rahmen dieser Erfindung zu verlassen.

### Bezugszeichenliste

- 100: Phasenmodul
- 102: Polelement
- 103: Polelementrücken
- 104: Polelementschenkel
- 105: Polelementpaar

- 202: Polelement
- 204: Polelementschenkel
- 205: Polelementschenkel

- 300: Rotor
- 301: Rotorkörper
- 302: Rotorzahn

- 400: Rotor
- 401: Rotorkörper
- 402: Rotorzahn

- 410: Rotor
- 411: Rotorkörper
- 412: Rotorzahn

- 501: Polelement
- 502: Phasenmodulrücken
- 503: Aussparung

- 600: Phasenmodul
- 601: Phasenmodulrücken
- 602: Polelement
- 603: Polelementrücken
- 604: Polelementschenkel
- 605: Polelementpaar
- 606: Phasenmodulwicklung

- 800: Rotor
- 801: Rotorkörper
- 802': Außenseite
- 803: Permanentmagnetanordnung
- 804: Permanentmagnet

- 900: Rotor
- 901: Rotorkörper
- 904: Permanentmagnet
- 910: Rotor
- 911: Rotorkörper
- 914: Permanentmagnet

- A: Rotationsachse

## Patentansprüche

1. Transversalflussreluktanzmaschine mit einem eine Spulenanordnung mit wenigstens einem Phasenmodul (100 ; 600) umfassenden Primärteil und einem relativ zum Primärteil beweglichen Sekundärteil (300; 400; 410),
wobei ein Phasenmodul (100; 600) eine Phasenmodulwicklung (606), einen Phasenmodulrücken (101; 601) und wenigstens ein ein Polelementpaar (105; 605) bildendes Paar von Polelementen (102; 602) aufweist,
wobei jedes Polelement (102; 602) einen sich senkrecht vom Phasenmodulrückem (101; 601) erstreckenden Polelementrücken (103; 603) und einen sich parallel zum Phasenmodulrücken (101; 601) erstreckenden Polelementschenkel (104; 604) aufweist,
wobei der Phasenmodulrücken (101; 601) zusammen mit jedem Polelement (102; 602) jeweils einen im wesentlichen C-förmigen Querschnitt bildet,
wobei die Phasenmodulwicklung (606) zumindest teilweise innerhalb des im wesentlichen C-förmigen Querschnitts angeordnet ist,
wobei die Polelemente (102; 602) des wenigstens einen Polelementpaares (105; 605) alternierend am Phasenmodulrücken (101; 601) angeordnet sind, insbesondere eingelassen sind,
wobei insbesondere der Phasenmodulrücken (101; 601) zusammen mit einem ersten oder einem zweiten Polelement (102; 602) einen im wesentlichen rechteckigen Querschnitt bildet.

2. Transversalflussmaschine mit einem Primärteil und einem relativ zum Primärteil beweglichen Sekundärteil (800), wobei das Primärteil oder das Sekundärteil (800) eine Spulenanordnung mit wenigstens einem Phasenmodul (100; 600) umfasst, wobei ein Phasenmodul (100; 600) eine Phasenmodulwicklung (606), einen Phasenmodulrücken (101; 601) und wenigstens ein ein Polelementpaar (105; 605) bildendes Paar von Polelementen (102; 602) aufweist, wobei jedes Polelement (102; 602) einen sich senkrecht vom Phasenmodulrücken (101; 601) erstreckenden Polelementrücken (103; 603) und einen sich parallel zum Phasenmodulrücken (101; 601) erstreckenden Polelemehtschenkel (104; 604) aufweist, wobei der Phasenmodulrücken (101; 601) zusammen mit jedem Polelement (102; 602) jeweils einen im wesentlichen C-förmigen Querschnitt bildet, wobei die Phasenmodulwicklung (606) zumindest teilweise innerhalb des im wesentlichen C-förmigen Querschnitts angeordnet ist, wobei die Polelemente (102; 602) des wenigstens einen Polelementpaares (105; 605) alternierend am Phasenmodulrücken (101; 601) angeordnet sind, insbesondere eingelassen sind, wobei insbesondere der Phasenmodulrücken (101; 601) zusammen mit einem ersten oder einem zweiten Polelement (102; 602) einen im wesentlichen rechteckigen Querschnitt bildet.

3. Maschine nach einem der vorstehenden Ansprüche, wobei die Phasenmodulwicklung (606) des wenigstens einen Phasenmoduls (100; 600) mäanderförmig um die Polelemente (102; 602) angeordnet ist.

4. Maschine nach einem der vorstehenden Ansprüche, wobei wenigstens ein Polelement (102; 602) am Phasenmodulrücken (101; 601) kraft-, form- oder stoffschlüssig, bevorzugt kraftschlüssig, befestigt ist.

5. Maschine nach einem der vorstehenden Ansprüche, wobei ein Polelementschenkel (104; 604) wenigstens eines Polelements (102; 602) an einer Innenkante abgefast ist.

6. Maschine nach einem der vorstehenden Ansprüche, wobei das wenigstens eine Phasenmodul (100; 600) wenigstens drei voneinander nicht gleich beabstandete Polelementpaare (105; 605) aufweist.

7. Maschine nach einem der vorstehenden Ansprüche, die eine Polbedeckung von ca. 30% bis ca. 90%, insbesondere ca 55% bis ca. 60% aufweist.

8. Maschine nach einem der vorstehenden Ansprüche, die als Rotationsmaschine ausgebildet ist und wenigstens eine Phasenmodulgruppe mit einer Anzahl n ≥ 3 Phasenmodulen (100; 600) aufweist, wobei die Phasenmodule (100; 600) derselben Phasenmodulgruppe jeweils um einen vorgegebenen Winkel βᵢ ∈ [-20°;20°]; i=l, ..., n-1; elektrisch zueinander verdreht angeordnet sind.

9. Maschine nach einem der vorstehenden Ansprüche, die als Rotationsmaschine ausgebildet ist und eine Anzahl m ≥ 3 Phasenmodulgruppen aufweist, wobei die Phasenmodule (100; 600) unterschiedlicher Phasenmodulgruppen jeweils um einen vorgegebenen Winkel (k·360°/m) + αₖ; αₖ ∈ [-15°;15°]; k=1,...,m-1; elektrisch zueinander verdreht angeordnet sind.

10. Verfahren zur Herstellung einer Transversalflussreluktanzmaschine mit einem eine Spulenanordnung mit wenigstens einem Phasenmodul (100; 600) umfassenden Primärteil und einem relativ zum Primärteil beweglichen Sekundärteil (300; 400; 410),
wobei ein Phasenmodulrücken (101; 601) des wenigstens einen Phasenmoduls (100; 600) mit wenigstens einem ersten Polelement (102; 602), das einen sich senkrecht vom Phasenmodulrücken (101; 601) erstreckenden Polelementrücken (103; 603) und einen sich parallel zum Phasenmodulrücken (101; 601) erstreckenden Polelementschenkel (104; 604) aufweist, versehen wird, so dass der Phasenmodulrücken (101; 601) zusammen mit jedem ersten Polelement (102; 602) jeweils einen im wesentlichen C-förmigen Querschnitt bildet,
wobei eine Phasenmodulwicklung (606) des wenigstens einen Phasenmoduls (100; 600) innerhalb des im wesentlichen C-förmigen Querschnitts angeordnet wird,
wobei der Phasenmodulrücken (101; 601) des wenigstens einen Phasenmoduls (100; 600) mit wenigstens einem zweiten Polelement (102; 602), das einen sich senkrecht vom Phasenmodulrücken (101; 601) erstreckenden Polelementrücken (101; 601) und einen sich parallel zum Phasenmodulrücken (101; 601) erstreckenden Polelementschenkel (104; 604) aufweist, versehen wird, insbesondere so, dass der Phasenmodulrücken (101; 601) zusammen mit einem ersten oder einem zweiten Polelement (102; 602) einen vorzugsweise im wesentlichen rechteckigen Querschnitt bildet.

11. Verfahren zur Herstellung einer Transversalflussmaschine mit einem Primärteil und einem relativ zum Primärteil beweglichen Sekundärteil (800), wobei das Primärteil oder das Sekundärteil (800) eine Spulenanordnung mit wenigstens einem Phasenmodul (100; 600) umfasst,
wobei ein Phasenmodulrücken (101; 601) des wenigstens einen Phasenmoduls (100; 600) mit wenigstens einem ersten Polelement (102; 602), das einen sich senkrecht vom Phasenmodulrücken (101; 601) erstreckenden Polelementrücken (103; 603) und einen sich parallel zum Phasenmodulrücken (101; 601) erstreckenden Polelementschenkel (104; 604) aufweist, versehen wird, so dass der Phasenmodulrücken (101; 601) zusammen mit jedem ersten Polelement (102; 602) jeweils einen im wesentlichen C-förmigen Querschnitt bildet,
wobei eine Phasenmodulwicklung (606) des wenigstens einen Phasenmoduls (100; 600) innerhalb des im wesentlichen C-förmigen Querschnitts angeordnet wird,
wobei der Phasenmodulrücken (101; 601) des wenigstens einen Phasenmoduls (100; 600) mit wenigstens einem zweiten Polelement (102; 602), das einen sich senkrecht vom Phasenmodulrücken (101; 601) erstreckenden Polelementrücken (101; 601) und einen sich parallel zum Phasenmodulrücken. (101; . 601) erstreckenden Polelementschenkel (104; 604) aufweist, versehen wird, insbesondere so,' dass der Phasenmodulrücken (101; 601) zusammen mit einem ersten oder einem zweiten Polelement (102; 602) einen vorzugsweise im wesentlichen rechteckigen Querschnitt bildet.

12. Verfahren zur Herstellung einer Maschine nach Anspruch 10 oder 11, wobei die Phasenmodulwicklung (606) des wenigstens einen Phasenmoduls (100; 600) mäanderförmig um die Polelemente (102; 602) angeordnet wird.
